# EUROPEAN PATENT APPLICATION

(11) **EP 4 542 470 A1**
(43) Date of publication of application: **23.04.2025**
(21) Application number: 22946929.1
(22) Date of filing: 14.10.2022
(51) Int. Cl.: G06Q 10/0833

(54) **AIRPLANE TIRE MANAGEMENT DEVICE AND AIRPLANE TIRE MANAGEMENT PROGRAM**

(30) Priority: 14.06.2022 JP 2022096057
(71) Applicant: BRIDGESTONE CORPORATION, Chuo-ku Tokyo 104-8340 (JP)
(72) Inventor: TODA, Hayato, Tokyo 104-8340 (JP); SAKAMOTO, Hiroki, Tokyo 104-8340 (JP)
(74) Representative: Marks & Clerk LLP
(86) International application number: PCT/JP2022/038475
(87) International publication number: WO 2023/243114

(57) **Abstract**

An airplane tire management device includes: a communication unit that is able to communicate with a production facility that produces an airplane tire and a client facility that is a client for the airplane tire produced by the production facility; a receiving unit that receives, through the communication unit, identification information of the airplane tire and status information that includes position information or a delivery status of the airplane tire; a storage unit that stores the identification information and the status information received by the receiving unit; an information processing unit that, when the receiving unit receives the status information, updates the status information stored in the storage unit; and an output unit that is able to output the identification information and the status information.

## Description

### Technical Field

The present disclosure relates to an airplane tire management device and an airplane tire management program.

### Background Art

Conventionally, an airplane tire management system that manages identification information of an airplane tire and a wheel attached to the airplane tire in association with each other is known (see, e.g., WO 2019/039171).

### SUMMARY OF INVENTION

### Technical Problem

The management system according to Patent Literature 1 has room for further improvement in tracking and management of airplane tires.

The disclosure has been made in view of the above points, and can efficiently track and manage airplane tires.

### Solution to Problem

The disclosure includes: a communication unit that is able to communicate with a production facility that produces an airplane tire and a client facility that is a client for the airplane tire produced by the production facility; a receiving unit that receives, via the communication unit, identification information of the airplane tire and status information that includes position information or a delivery status of the airplane tire; a storage unit that stores the identification information and the status information received by the receiving unit; an information processing unit that updates the status information stored in the storage unit in a case in which the receiving unit receives the status information; and an output unit that is able to output the identification information and the status information.

### BRIEF DESCRIPTION OF DRAWINGS

Fig. 1 is a diagram illustrating a schematic configuration of an airplane tire management system according to an embodiment.
Fig. 2 is a block diagram illustrating a configuration of a storage according to the embodiment.
Fig. 3 is a block diagram illustrating a functional configuration of a CPU according to the embodiment.
Fig. 4 is an example of a processing flow of the airplane tire management system according to the embodiment.
Fig. 5A is an example of dynamic data according to the embodiment.
Fig. 5B is an example of dynamic data according to the embodiment.
Fig. 6 is an example of a delivery ID according to the embodiment.

### DESCRIPTION OF EMBODIMENTS

### (Embodiment)

Hereinafter, an example of an embodiment of the disclosure will be described with reference to the drawings. In the drawings, the same or equivalent components and portions are denoted by the same reference numerals. Dimensional ratios in the drawings are exaggerated for convenience of description, and may be different from actual ratios.

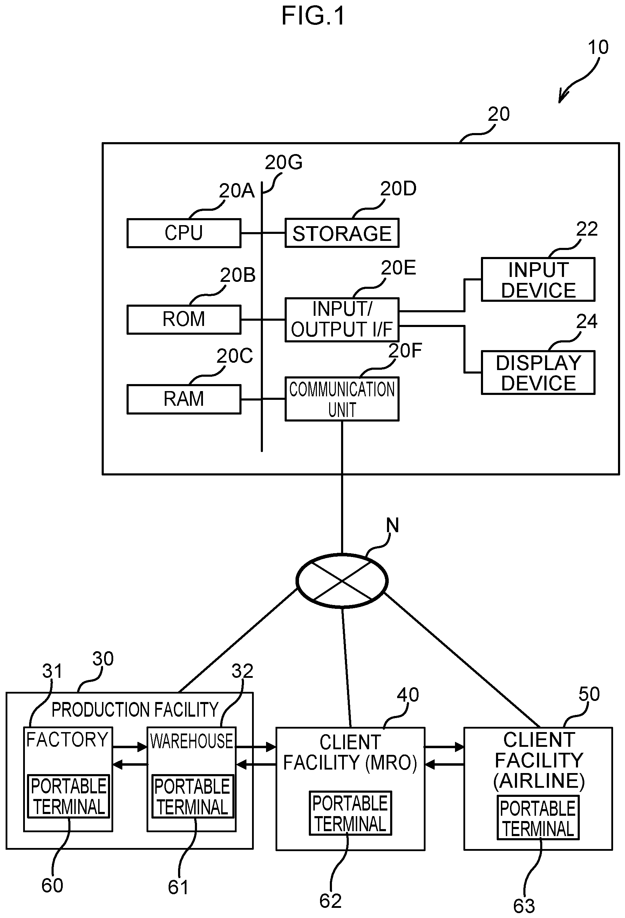

Fig. 1 is a diagram illustrating an example of a schematic configuration of an airplane tire management system 10 according to the present embodiment.

As illustrated in Fig. 1, the airplane tire management system 10 according to the embodiment includes a server 20, a production facility 30, a client facility (Maintenance Repair Overhaul (MRO)) 40, and a client facility (airline) 50. The server 20, the production facility 30, the client facility (MRO) 40, and the client facility (airline) 50 are connected through a network N. For example, a local area network (LAN), a wide area network (WAN), the Internet, or the like is applied to the network N. Here, in the embodiment, the server 20 is an example of an airplane tire management device.

The production facility 30 is a tire manufacturer that produces an airplane tire T. The worker of the production facility 30 acquires identification information and the like of the airplane tire T described later using portable terminals 60 and 61.

The client facility (MRO) 40 is an example of a client facility, and is a facility that performs repair, inspection, maintenance, and the like of the airplane tire T. For example, the rim assembly of the airplane tire T and a wheel W is performed. The client facility (airline) 50 is an example of a client facility, and is a facility that uses an airplane tire T attached to an airplane. The client facility is not limited to the client facility (MRO) 40 and the client facility (airline) 50, and may include other facilities, for example, an agent of an airplane tire T, a distribution company, and the like. The worker of the client facility (MRO) 40 or the client facility (airline) 50 acquires identification information and the like of the airplane tire T described later using portable terminals 62 and 63.

The portable terminals 60, 61, 62, and 63 used by workers of each facility (production facility 30, client facility (MRO) 40, and client facility (airline) 50) can communicate with the server 20 through a computer (not illustrated) installed in each facility or not through a computer (not illustrated) installed in each facility, and transmit the acquired information to the server 20. The portable terminals 60, 61, 62, and 63 are devices that can be carried by the workers, and are, for example, smartphones. The portable terminals 60, 61, 62, and 63 can acquire date/time information when the information is acquired. The portable terminals 60, 61, 62, and 63 can acquire position information of a place where the information is acquired using a global positioning system (GPS), position information of the portable terminals 60, 61, 62, and 63 registered in advance, or the like.

### (Server)

Fig. 1 illustrates the server 20 according to an embodiment of the disclosure. The server 20 executes a processing program 100 to be described later to receive identification information and status information of the airplane tire T, and thereby manages tracking and delivery of the airplane tire T..

The server 20 includes a central processing unit (CPU) 20A, a read only memory (ROM) 20B, a random access memory (RAM) 20C, a storage 20D, an input/output interface (I/F) 20E, and a communication unit 20F. The CPU 20A, the ROM 20B, the RAM 20C, the storage 20D, the input/output I/F 20E, and the communication unit 20F are communicably connected to each other through a bus 20G.

The CPU 20A is a central processing unit, and executes various programs and controls each unit. That is, the CPU 20A reads a program from the ROM 20B or the storage 20D, and executes the program using the RAM 20C as a work area.

The ROM 20B stores various programs and various data.

The RAM 20C as a work area temporarily stores a program or data.

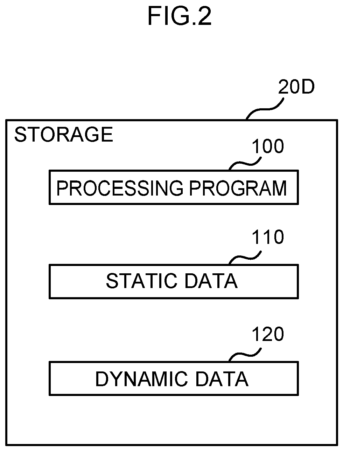

The storage 20D includes a hard disk drive (HDD) or a solid state drive (SSD), and stores various programs and various data. As illustrated in Fig. 2, the storage 20D of the embodiment stores a processing program 100, static data 110, and dynamic data 120. As will be described later, the identification information and the status information received by a receiving unit 200 are stored in the static data 110 and the dynamic data 120. The storage 20D is an example of a storage unit. The processing program 100, the static data 110, and the dynamic data 120 may be stored in the ROM 20B.

The processing program 100 is an example of an airplane tire management program, and is a program for realizing each function of the server 20.

The static data 110 stores identification information of the airplane tire T, for example, a tire ID, a tire size, a serial, and the like. The tire ID is any number given to each airplane tire T, and the serial is a number imprinted on the airplane tire T. The identification information of the airplane tire T is not limited to the tire ID, the tire size, the serial, and the like, and may be any information that can identify the airplane tire T. The identification information of the airplane tire T may be acquired by reading a two-dimensional code or radio frequency identification (RFID) attached to the airplane tire T with the portable terminals 60, 61, 62, and 63, or may be acquired by a worker reading characters or the like imprinted on the airplane tire T and inputting the characters or the like using the portable terminals 60, 61, 62, and 63. Hereinafter, the identification information of the airplane tire T may be referred to as a tire ID.

The dynamic data 120 stores status information that includes position information or a delivery status of the airplane tires T. The position information of the airplane tire T is acquired using the GPS of the portable terminals 60, 61, 62, and 63 in which the identification information has been acquired, the position information of the portable terminals 60, 61, 62, and 63 registered in advance, and the like.

As illustrated in Fig. 1, the input/output I/F 20E is an interface for communicating with an input device 22 and a display device 24. The input device 22 and the display device 24 may be directly connected to the bus 20G.

The communication unit 20F is an interface that is able to communicate with a production facility 30 that produces airplane tires and a plurality of client facilities (the client facility (MRO) 40 and the client facility (airline) 50) that are clients of airplane tires produced by the production facility 30. For example, the communication unit 20F is connected to the network N.

The input device 22 is an input device such as a keyboard or a mouse.

The display device 24 is a display device such as a liquid crystal display.

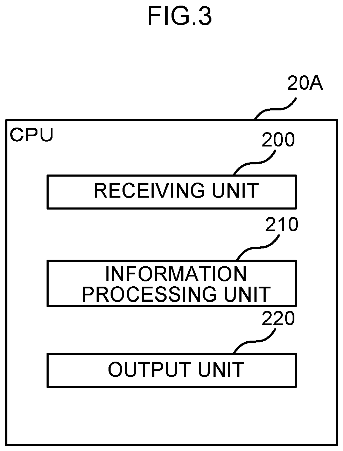

Next, a functional configuration of the server 20 according to the embodiment will be described with reference to Fig. 3.

As illustrated in Fig. 3, in the server 20 of the embodiment, the CPU 20A executes the processing program 100 to function as a receiving unit 200, an information processing unit 210, and an output unit 220.

The receiving unit 200 has a function of receiving identification information of the airplane tire T and status information that includes position information or a delivery status of the airplane tire T through the communication unit 20F. Specifically, the information is received from the portable terminals 60, 61, 62, and 63.

The information processing unit 210 stores, in the storage 20D, the identification information of the airplane tire T received by the receiving unit 200 and the status information that includes the position information or the delivery status of the airplane tire T. In a case in which the receiving unit 200 receives the status information, the receiving unit 200 updates the status information stored in the storage 20D.

The information processing unit 210 sets a delivery ID in association with one or more pieces of identification information acquired in the production facility 30 that dispatches the airplane tire T, the client facility (MRO) 40, or the client facility (airline) 50. The information processing unit 210 verifies whether or not the delivery ID has been acquired in a production facility or a client facility that receives airplane tires. In a case in which at least a part of the identification information in which the same delivery ID is set is not acquired in the production facility 30, the client facility (MRO) 40, or the client facility (airline) 50 that has received the airplane tire T, the information processing unit 210 specifies the airplane tire T of the identification information that is not acquired.

The output unit 220 can output identification information and status information of the airplane tire T. For example, operation from each facility (production facility 30, client facility (MRO) 40, or client facility (airline) 50) causes the output unit 220 to display a delivery status, a conformity certificate, and the like on a display of a computer installed in each facility, when the delivery status of the airplane tire T is confirmed or the conformity certificate to be described later is displayed.

The output unit 220 can output the result of the verification performed by the information processing unit 210.

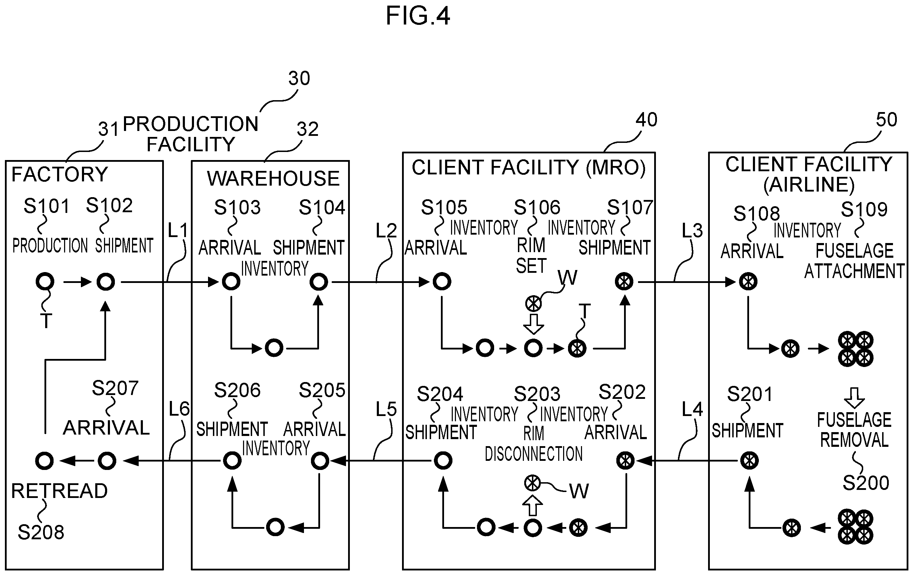

Next, a flow of processing of the airplane tire management system 10 will be described with reference to Figs. 4, 5A, 5B, and 6.

As illustrated in Fig. 4, the production facility 30 includes a factory 31 and a warehouse 32. In step S101, the production facility 30 produces the airplane tire T in the factory 31. The worker of the production facility 30 transmits the identification information of the airplane tire T produced in the factory 31 to the server 20 using the portable terminal 60 or the like. The CPU 20A of the server 20 stores the identification information of the airplane tire T as the static data 110.

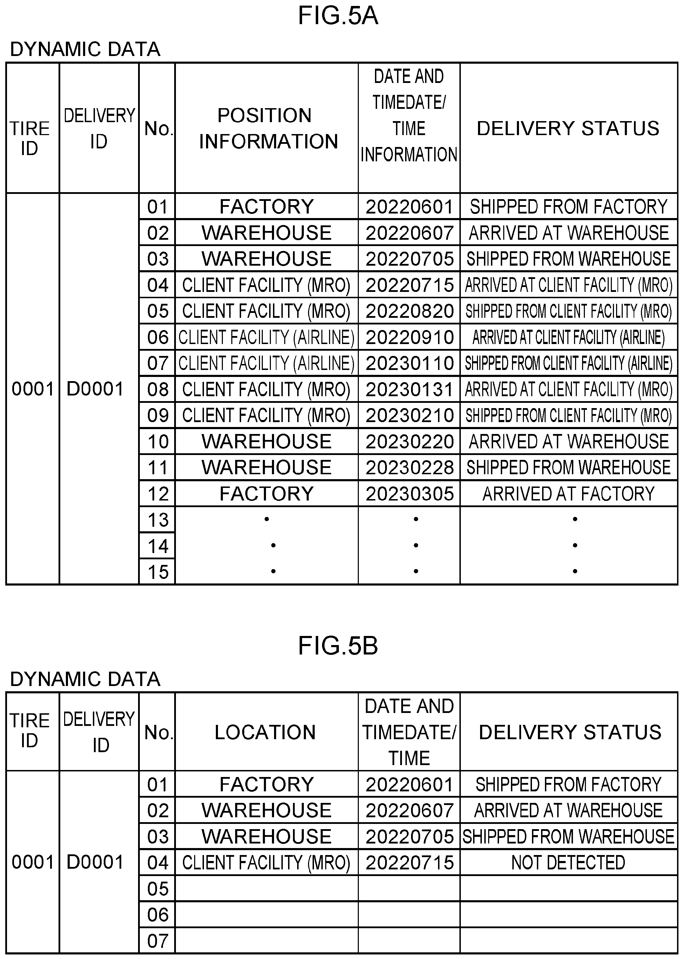

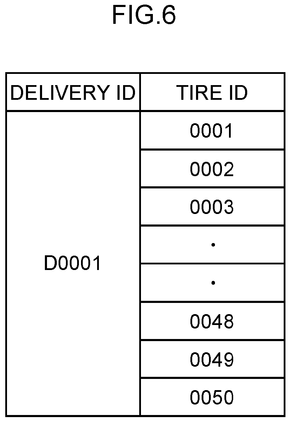

Next, in step S102, the airplane tires T produced in the factory 31 are shipped from the factory 31 to the warehouse 32 (arrow L1 in Fig. 4) and stored. At the time of shipment from the factory 31 to the warehouse 32, the worker acquires the identification information of the airplane tire T by using the portable terminal 60 that is set to a state of reading the identification information of the airplane tire T to be shipped. At this time, the portable terminal 60 acquires the position information in which the identification information has been acquired and the date/time information. Then, the worker transmits the identification information, the position information, and the date/time information acquired using the portable terminal 60 to the server 20. As illustrated in "No. 01" of Fig. 5A, the CPU 20A of the server 20 stores the identification information, the position information, and the date/time information of the airplane tire T as the dynamic data 120. The CPU 20A of the server 20 sets the delivery ID in association with one or more pieces of identification information acquired in the factory 31 that dispatches the airplane tires T. For example, as illustrated in Fig. 6, one delivery ID is set for each container containing fifty airplane tires T. The delivery ID includes delivery destination information and the like.

The present invention is not limited to the case of reading the identification information using the portable terminal 60 that is set to a state of reading the identification information of the airplane tire T to be shipped, and the server 20 may determine whether the airplane tire T arrives or is shipped by the number of times the identification information is received with the same position information. That is, in a case in which the first identification number is received from the factory 31, it may be determined as shipment, and in a case in which the same identification information is received for the second time, it may be determined as arrival. As will be described later, in a case in which the position information indicates the warehouse 32, the client facility (MRO) 40, or the client facility (airline) 50, and the first identification information is received, it may be determined as arrival while in a case in which the second identification information is received, it may be determined as shipment. In this way, the worker can read the identification number without changing the states of the portable terminals 60, 61, 62, and 63, and the work can be simplified and errors can be prevented.

Next, when the airplane tire T in step S103 arrives at the warehouse 32 from the factory 31, the worker of the warehouse 32 reads the delivery ID arrived at the warehouse 32 from the factory 31 using the portable terminal 61, and transmits the delivery ID to the server 20. The CPU 20A of the server 20 stores the delivery ID as the dynamic data 120. Then, the CPU 20A of the server 20 verifies whether all the delivery IDs shipped from the factory 31 to the warehouse 32 have been read. Then, the CPU 20A of the server 20 outputs an verification result, for example, displays the verification result on the display device 24, or notifies the factory 31, which is the shipping side of the airplane tires T, or the warehouse 32, which is the arrival side, by e-mail or the like. In a case in which there is a delivery ID that has not been read, the CPU 20A of the server 20 specifies the delivery ID that has been shipped from the factory 31 but has not been read, and confirms the delivery status such as whether the specified delivery ID has been read by another facility other than the warehouse 32 that is the arrival side. Then, the CPU 20A of the server 20 outputs a confirmation result, for example, displays the confirmation result on the display device 24, or notifies the factory 31, which is the shipping side of the airplane tires T, or the warehouse 32, which is the arrival side, by e-mail or the like.

In step S103, the worker of the warehouse 32 who has received the airplane tire T reads the identification information of the received airplane tire T using the portable terminal 61, and transmits the identification information to the server 20. As illustrated in "No. 02" of Fig. 5A, the CPU 20A of the server 20 stores the identification information, the position information, and the date/time information of the airplane tire T as the dynamic data 120. The CPU 20A of the server 20 verifies whether all the identification information which is shipped from the factory 31 and to which the same delivery ID is set has been read by the warehouse 32. That is, it is confirmed whether all the airplane tires T shipped with the same set delivery ID have arrived. Then, the CPU 20A of the server 20 outputs the verification result, for example, displays the verification result on the display device 24, or notifies the factory 31, which is the shipping side of the airplane tires T, or the warehouse 32, which is the arrival side, by e-mail or the like. The CPU 20A of the server 20 specifies the identification information that has been shipped from the factory 31 but has not been read, and confirms the delivery status such as whether the specified identification information has been read by another facility other than the warehouse 32 that is the arrival side. As will be described later, the worker confirms whether the identification information has not been read due to peeling of the two-dimensional code or the RFID attached to the airplane tire T. Then, the CPU 20A of the server 20 outputs a confirmation result, for example, displays the confirmation result on the display device 24, or notifies the factory 31, which is the shipping side of the airplane tires T, or the warehouse 32, which is the arrival side, by e-mail or the like.

When reading the identification information, the portable terminal 61 acquires the position information in which the identification information has been acquired, and the date/time information. Then, the worker transmits the position information and the date/time information acquired using the portable terminal 61 to the server 20. The CPU 20A of the server 20 stores the position information and the date/time information as the dynamic data 120 in association with the identification information of the airplane tire T.

In a case in which there is an abnormality in the airplane tire T, for example, a two-dimensional code or an RFID attached to the airplane tire T has been peeled off, or the airplane tire T is damaged, the worker of the warehouse 32 reads identification information of the airplane tire T having the abnormality using the portable terminal 61 that is set to a state of selecting the abnormality, and transmits the identification information to the server 20. Here, in a case in which the two-dimensional code or the RFID attached to the airplane tire T has been peeled off, by reading the serial is read using the portable terminal 61 or by the worker inputting the serial using the terminal 61to acquire the identification information. The CPU 20A of the server 20 specifies the abnormal airplane tire T from the received identification information, and outputs a response such as re-shipping of an equivalent product from the factory 31. The CPU 20A of the server 20 stores the abnormal airplane tire T as the dynamic data 120 in association with the identification information of the airplane tire T. In a case in which there is an abnormality in the airplane tire T, a photograph may be taken using a camera provided in the portable terminal 61 or a camera other than the portable terminal 61, and the taken photograph may be transmitted to the server 20. By transmitting the photograph, it becomes easy to grasp the state of the abnormal airplane tire T, and it becomes possible to quickly determine whether or not to re-ship the equivalent product from the factory 31 or take a measure such as reviewing the delivery. Such a photograph is stored as the dynamic data 120 in association with the identification information of the abnormal airplane tire T.

Next, in step S104, the production facility 30 ships the airplane tire T from the warehouse 32 in response to the request of the client facility (MRO) 40 (arrow L2 in Fig. 4). At the time of shipment from the warehouse 32 to the client facility (MRO) 40, the worker acquires the identification information of the airplane tire T by using the portable terminal 61 that is set to a state of reading the identification information of the airplane tire T to be shipped. At this time, the portable terminal 61 acquires the position information in which the identification information has been acquired and the date/time information. Then, the worker transmits the identification information, the position information, and the date/time information acquired using the portable terminal 61 to the server 20. As illustrated in "No. 03" of Fig. 5A, the CPU 20A of the server 20 stores the identification information, the position information, and the date/time information of the airplane tire T as the dynamic data 120. The CPU 20A of the server 20 sets the delivery ID in association with one or more pieces of identification information acquired in the factory 31 that dispatches the airplane tires T. For example, one delivery ID is set for each container containing fifty airplane tires T. The delivery ID includes delivery destination information and the like.

Next, when the airplane tire T in step S105 arrives at the client facility (MRO) 40 from the warehouse 32, a worker of the client facility (MRO) 40 reads the delivery ID arrived at the client facility (MRO) 40 from the warehouse 32 using the portable terminal 62, and transmits the delivery ID to the server 20. The CPU 20A of the server 20 stores the delivery ID as the dynamic data 120. Then, the server 20 verifies whether all of the delivery IDs shipped from the warehouse 32 to the client facility (MRO) 40 have been read. Then, the CPU 20A of the server 20 outputs the verification result, for example, displays the verification result on the display device 24, or notifies the warehouse 32, which is the shipping side of the airplane tire T, or the client facility (MRO) 40, which is the arrival side, of the verification result by e-mail or the like. In a case in which there is a delivery ID that has not been read, the CPU 20A of the server 20 specifies the delivery ID that has been shipped from the warehouse 32 but has not been read, and confirms the delivery status such as whether the specified delivery ID has been read by another facility other than the client facility (MRO) 40 that is the arrival side. Then, the CPU 20A of the server 20 outputs the confirmation result, for example, displays the verification result on the display device 24, or notifies the warehouse 32, which is the shipping side of the airplane tire T, or the client facility (MRO) 40, which is the arrival side, of the verification result by e-mail or the like.

In step S105, the worker of the client facility (MRO) 40 who has received the airplane tire T reads the identification information of the received airplane tire T using the portable terminal 62, and transmits the identification information to the server 20. As illustrated in "No. 04" of Fig. 5A, the CPU 20A of the server 20 stores the identification information, the position information, and the date/time information of the airplane tire T as the dynamic data 120. The CPU 20A of the server 20 verifies whether all the identification information which is shipped from the warehouse 32 and to which the same delivery ID is set has been read by the client facility (MRO) 40. That is, it is confirmed whether all the airplane tires T shipped with the same set delivery ID have arrived. Then, the CPU 20A of the server 20 outputs the verification result, for example, displays the verification result on the display device 24, or notifies the warehouse 32, which is the shipping side of the airplane tire T, or the client facility (MRO) 40, which is the arrival side, of the verification result by e-mail or the like. The CPU 20A of the server 20 specifies the identification information that has been shipped from the warehouse 32 but has not been read, and confirms the delivery status such as whether the specified identification information has been read by another facility other than the client facility (MRO) 40 that is the arrival side. As will be described later, the worker confirms whether the identification information has not been read due to peeling of the two-dimensional code or the RFID attached to the airplane tire T. Then, the CPU 20A of the server 20 outputs the confirmation result, for example, displays the verification result on the display device 24, or notifies the warehouse 32, which is the shipping side of the airplane tire T, or the client facility (MRO) 40, which is the arrival side, of the verification result by e-mail or the like. Regarding the identification information that has not been read, the CPU 20A of the server 20 stores the delivery status as "not detected" or the like, as illustrated in "No. 04" of Fig. 5A.

When reading the identification information, the portable terminal 62 acquires the position information in which the identification information has been acquired, and the date/time information. Then, the worker transmits the position information and the date/time information acquired using the portable terminal 62 to the server 20. The CPU 20A of the server 20 stores the position information and the date/time information as the dynamic data 120 in association with the identification information of the airplane tire T.

In a case in which there is an abnormality in the airplane tire T, for example, a two-dimensional code or an RFID attached to the airplane tire T has been peeled off, or the airplane tire T is damaged, the worker of the client facility (MRO) 40 reads identification information of the airplane tire T having the abnormality using the portable terminal 62 that is set to a state of selecting the abnormality, and transmits the identification information to the server 20. Here, in a case in which the two-dimensional code or the RFID attached to the airplane tire T has been peeled off, the identification information is acquired by reading the serial using the portable terminal 62 or by the worker inputting the serial using the terminal 62. The CPU 20A of the server 20 specifies the abnormal airplane tire T from the received identification information, and outputs a response such as re-shipping of an equivalent product from the factory 31. The CPU 20A of the server 20 stores the abnormal airplane tire T as the dynamic data 120 in association with the identification information of the airplane tire T. In a case in which there is an abnormality in the airplane tire T, a photograph may be taken using a camera provided in the portable terminal 62 or a camera other than the portable terminal 62, and the taken photograph may be transmitted to the server 20. By transmitting the photograph, it becomes easy to grasp the state of the abnormal airplane tire T, and it becomes possible to quickly determine whether or not to re-ship the equivalent product from the factory 31 or take a measure such as reviewing the delivery. Such a photograph is stored as the dynamic data 120 in association with the identification information of the abnormal airplane tire T.

Next, in step S106, the client facility (MRO) 40 attaches the wheel W to the airplane tire T (rim set). Then, in step S107, the airplane tire T with the wheel W is shipped in response to a request from the client facility (airline) 50 (arrow L3 in Fig. 4). At the time of shipment from the client facility (MRO) 40 to the client facility (airline) 50, the worker acquires the identification information of the airplane tire T by using the portable terminal 62 that is set to a state of reading the identification information of the airplane tire T to be shipped. At this time, the portable terminal 62 acquires the position information in which the identification information has been acquired and the date/time information. Then, the worker transmits the identification information, the position information, and the date/time information acquired using the portable terminal 62 to the server 20. As illustrated in "No. 05" of Fig. 5A, the CPU 20A of the server 20 stores the identification information, the position information, and the date/time information of the airplane tire T as the dynamic data 120. The CPU 20A of the server 20 sets the delivery ID in association with one or more pieces of identification information acquired in the client facility (MRO) 40 that dispatches the airplane tires T. For example, one delivery ID is set for each container containing fifty airplane tires T. The delivery ID includes delivery destination information and the like.

Next, when the airplane tire T in step S108 arrives at the client facility (airline) 50 from the client facility (MRO) 40, a worker of the client facility (airline) 50 reads the delivery ID arrived at the client facility (airline) 50 from the client facility (MRO) 40 using the portable terminal 63, and transmits the delivery ID to the server 20. The CPU 20A of the server 20 stores the delivery ID as the dynamic data 120. Then, the CPU 20A of the server 20 verifies whether all of the delivery IDs shipped from the client facility (MRO) 40 to the client facility (airline) 50 have been read. Then, the CPU 20A of the server 20 outputs the verification result, for example, displays the verification result on the display device 24, or notifies the client facility (MRO) 40, which is the shipping side of the airplane tire T, or the client facility (airline) 50, which is the arrival side, of the verification result by e-mail or the like. In a case in which there is a delivery ID that has not been read, the CPU 20A of the server 20 specifies the delivery ID that has been shipped from the client facility (MRO) but has not been read, and confirms the delivery status such as whether the specified delivery ID has been read by another facility other than the client facility (airline) 50 that is the arrival side. Then, the CPU 20A of the server 20 outputs the confirmation result, for example, displays the verification result on the display device 24, or notifies the client facility (MRO) 40, which is the shipping side of the airplane tire T, or the client facility (airline) 50, which is the arrival side, of the verification result by e-mail or the like.

In step S108, the worker of the client facility (airline) 50 who has received the airplane tire T reads the identification information of the received airplane tire T using the portable terminal 63, and transmits the identification information to the server 20. As illustrated in "No. 06" of Fig. 5A, the CPU 20A of the server 20 stores the identification information, the position information, and the date/time information of the airplane tire T as the dynamic data 120. The CPU 20A of the server 20 verifies whether all the identification information which is shipped from the client facility (MRO) 40 and to which the same delivery ID is set has been read by the client facility (airline) 50. Then, the CPU 20A of the server 20 outputs the verification result, for example, displays the verification result on the display device 24, or notifies the client facility (MRO) 40, which is the shipping side of the airplane tire T, or the client facility (airline) 50, which is the arrival side, of the verification result by e-mail or the like. The server 20 specifies identification information that has been shipped from the client facility (MRO) 40 but has not been read, and confirms the delivery status such as whether the specified identification information has been read by another facility other than the client facility (airline) 50 that is the arrival side. As will be described later, the worker confirms whether the identification information has not been read due to peeling of the two-dimensional code or the RFID attached to the airplane tire T. Then, the CPU 20A of the server 20 outputs the confirmation result, for example, displays the verification result on the display device 24, or notifies the client facility (MRO) 40, which is the shipping side of the airplane tire T, or the client facility (airline) 50, which is the arrival side, of the verification result by e-mail or the like.

When reading the identification information, the portable terminal 63 acquires the position information in which the identification information has been acquired, and the date/time information. Then, the worker transmits the position information and the date/time information acquired using the portable terminal 63 to the server 20. The CPU 20A of the server 20 stores the position information and the date/time information as the dynamic data 120 in association with the identification information of the airplane tire T.

In a case in which there is an abnormality in the airplane tire T, for example, a two-dimensional code or an RFID attached to the airplane tire T has been peeled off, or the airplane tire T is damaged, the worker of the client facility (airline) 50 reads identification information of the airplane tire T having the abnormality using the portable terminal 63 that is set to a state of selecting the abnormality, and transmits the identification information to the server 20. Here, in a case in which the two-dimensional code or the RFID attached to the airplane tire T has been peeled off, the identification information is acquired by reading the serial using the portable terminal 63 or by the worker inputting the serial using the terminal 63. The CPU 20A of the server 20 specifies the abnormal airplane tire T from the received identification information, and outputs a response such as re-shipping of an equivalent product from the factory 31. The CPU 20A of the server 20 stores the abnormal airplane tire T as the dynamic data 120 in association with the identification information of the airplane tire T. In a case in which there is an abnormality in the airplane tire T, a photograph may be taken using a camera provided in the portable terminal 63 or a camera other than the portable terminal 63, and the taken photograph may be transmitted to the server 20. By transmitting the photograph, it becomes easy to grasp the state of the abnormal airplane tire T, and it becomes possible to quickly determine whether or not to re-ship the equivalent product from the factory 31 or take a measure such as reviewing the delivery. Such a photograph is stored as the dynamic data 120 in association with the identification information of the abnormal airplane tire T.

Next, in step S109, the client facility (airline) 50 attaches the airplane tire T to the fuselage of the airplane. Then, the airplane tire T is used until the airplane tire T wears. In step S200, after the airplane tire T wears, the client facility (airline) 50 removes the airplane tire T from the fuselage of the airplane. In step S201, the airplane tire T for collection is shipped to the client facility (MRO) 40 (arrow L4 in Fig. 4). At the time of shipment from the client facility (airline) 50 to the client facility (MRO) 40, the worker acquires the identification information of the airplane tire T by using the portable terminal 63 that is set to a state of reading the identification information of the airplane tire T to be shipped. In a case in which the two-dimensional code or the RFID attached to the airplane tire T to be collected has been peeled off, the identification information is acquired by reading the serial using the portable terminal 63 or by the worker inputting the serial using the terminal 63. At this time, the portable terminal 63 acquires the position information in which the identification information has been acquired and the date/time information. Then, the worker transmits the identification information, the position information, and the date/time information acquired using the portable terminal 63 to the server 20. As illustrated in "No. 07" of Fig. 5A, the CPU 20A of the server 20 stores the identification information, the position information, and the date/time information of the airplane tire T as the dynamic data 120. The CPU 20A of the server 20 sets the delivery ID in association with one or more pieces of identification information acquired in the client facility (airline) 50 that dispatches the airplane tires T. For example, one delivery ID is set for each container containing fifty airplane tires T. The delivery ID includes delivery destination information and the like.

After reading the identification information of the airplane tire T with the portable terminal 63, a worker of the client facility (airline) 50 may input consumption information of the airplane tire T for collection, for example, information obtained by measuring a remaining groove with a gauge or the like, and transmit the consumption information to the server 20. The CPU 20A of the server 20 stores, as the dynamic data 120, the consumption information of the airplane tire T for collection from the client facility (airline) 50 in association with the identification information of the airplane tire T. As a result, for example, by performing machine learning on the relationship between the flight history of the airplane and the remaining groove, it is possible to predict the remaining groove from the flight history and issue a warning. Since the consumption information can be acquired before the airplane tire T is collected in the factory 31, feedback such as a report on wear of the airplane tire T can be promptly provided from the production facility 30 to the client facility (airline) 50.

The server 20 may notify the production facility 30 (the factory 31 and the warehouse 32) of the date/time information of acquisition of the identification information of the airplane tire T for collection by e-mail or the like. As a result, the production facility 30 can know the collection timing of the airplane tire T before the airplane tire T for collection arrives, so that it becomes easy to prepare the factory 31 and to make a production plan of the airplane tires T.

Next, when the airplane tire T in step S202 arrives at the client facility (MRO) 40 from the client facility (airline) 50, a worker of the client facility (MRO) 40 reads the delivery ID arrived at the client facility (MRO) 40 from the client facility (airline) 50 using the portable terminal 62, and transmits the delivery ID to the server 20. The CPU 20A of the server 20 stores the delivery ID as the dynamic data 120. Then, the CPU 20A of the server 20 verifies whether all of the delivery IDs shipped from the client facility (airline) 50 to the client facility (MRO) 40 have been read. Then, the CPU 20A of the server 20 outputs the verification result, for example, displays the verification result on the display device 24, or notifies the client facility (airline) 50, which is the shipping side of the airplane tire T, or the client facility (MRO) 40, which is the arrival side, of the verification result by e-mail or the like. In a case in which there is a delivery ID that has not been read, the CPU 20A of the server 20 specifies the delivery ID that has been shipped from the client facility (airline) but has not been read, and confirms the delivery status such as whether the specified delivery ID has been read by another facility other than the client facility (MRO) 40 that is the arrival side. Then, the CPU 20A of the server 20 outputs the confirmation result, for example, displays the verification result on the display device 24, or notifies the client facility (airline) 50, which is the shipping side of the airplane tire T, or the client facility (MRO) 40, which is the arrival side, of the verification result by e-mail or the like.

In step S202, the worker of the client facility (MRO) 40 who has received the airplane tire T reads the identification information of the received airplane tire T using the portable terminal 62, and transmits the identification information to the server 20. As illustrated in "No. 08" of Fig. 5A, the CPU 20A of the server 20 stores the identification information, the position information, and the date/time information of the airplane tire T as the dynamic data 120. The CPU 20A of the server 20 verifies whether all the identification information which is shipped from the client facility (airline) 50 and to which the same delivery ID is set has been read by the client facility (MRO) 40. Then, the CPU 20A of the server 20 outputs the verification result, for example, displays the verification result on the display device 24, or notifies the client facility (airline) 50, which is the shipping side of the airplane tire T, or the client facility (MRO) 40, which is the arrival side, of the verification result by e-mail or the like. The CPU 20A of the server 20 specifies identification information that has been shipped from the client facility (airline) 50 but has not been read, and confirms the delivery status such as whether the specified identification information has been read by another facility other than the client facility (MRO) 40 that is the arrival side. As will be described later, the worker confirms whether the identification information has not been read due to peeling of the two-dimensional code or the RFID attached to the airplane tire T. Then, the CPU 20A of the server 20 outputs the confirmation result, for example, displays the verification result on the display device 24, or notifies the client facility (airline) 50, which is the shipping side of the airplane tire T, or the client facility (MRO) 40, which is the arrival side, of the verification result by e-mail or the like.

When reading the identification information, the portable terminal 62 acquires the position information in which the identification information has been acquired, and the date/time information. Then, the worker transmits the position information and the date/time information acquired using the portable terminal 62 to the server 20. The CPU 20A of the server 20 stores the position information and the date/time information as the dynamic data 120 in association with the identification information of the airplane tire T.

In a case in which there is an abnormality in the airplane tire T, for example, a two-dimensional code or an RFID attached to the airplane tire T has been peeled off, the worker of the client facility (MRO) 40 reads identification information of the airplane tire T having the abnormality using the portable terminal 62 that is set to a state of selecting the abnormality, and transmits the identification information to the server 20. Here, in a case in which the two-dimensional code or the RFID attached to the airplane tire T has been peeled off, the identification information is acquired by reading the serial using the portable terminal 62 or by the worker inputting the serial using the terminal 62. The CPU 20A of the server 20 specifies the abnormal airplane tire T from the received identification information. The server 20 stores the abnormal airplane tire T as the dynamic data 120 in association with the identification information of the airplane tire T.

Next, in step S203, the client facility (MRO) 40 that has received the airplane tire T for collection removes the wheel W from the airplane tire T (rim disconnection). Then, in step S204, the client facility (MRO) 40 ships the airplane tire T for collection to the warehouse 32 (arrow L5 in Fig. 4). At the time of shipment from the client facility (MRO) 40 to the warehouse 32, the worker acquires the identification information of the airplane tire T by using the portable terminal 62 that is set to a state of reading the identification information of the airplane tire T to be shipped. At this time, the portable terminal 62 acquires the position information in which the identification information has been acquired and the date/time information. Then, the worker transmits the identification information, the position information, and the date/time information acquired using the portable terminal 62 to the server 20. As illustrated in "No. 09" of Fig. 5A, the CPU 20A of the server 20 stores the identification information, the position information, and the date/time information of the airplane tire T as the dynamic data 120. The CPU 20A of the server 20 sets the delivery ID in association with one or more pieces of identification information acquired in the client facility (MRO) 40 that dispatches the airplane tires T. For example, one delivery ID is set for each container containing fifty airplane tires T. The delivery ID includes delivery destination information and the like.

Next, when the airplane tire T in step S205 arrives at the warehouse 32 from the client facility (MRO) 40, a worker of the warehouse 32 reads the delivery ID arrived at the warehouse 32 from the client facility (MRO) 40 using the portable terminal 61, and transmits the delivery ID to the server 20. The CPU 20A of the server 20 stores the delivery ID as the dynamic data 120. Then, the CPU 20A of the server 20 verifies whether all the delivery IDs shipped from the client facility (MRO) 40 to the warehouse 32 have been read. Then, the CPU 20A of the server 20 outputs the verification result, for example, displays the verification result on the display device 24, or notifies the client facility (MRO) 40, which is the shipping side of the airplane tire T, or the warehouse 32, which is the arrival side, of the verification result by e-mail or the like. In a case in which there is a delivery ID that has not been read, the CPU 20A of the server 20 specifies the delivery ID that has been shipped from the client facility (MRO) but has not been read, and confirms the delivery status such as whether the specified delivery ID has been read by another facility other than the warehouse 32 that is the arrival side. Then, the CPU 20A of the server 20 outputs the confirmation result, for example, displays the verification result on the display device 24, or notifies the client facility (MRO) 40, which is the shipping side of the airplane tire T, or the warehouse 32, which is the arrival side, of the verification result by e-mail or the like.

In step S205, the worker of the warehouse 32 who has received the airplane tire T reads the identification information of the received airplane tire T using the portable terminal 61, and transmits the identification information to the server 20. As illustrated in "No. 10" of Fig. 5A, the CPU 20A of the server 20 stores the identification information, the position information, and the date/time information of the airplane tire T as the dynamic data 120. The CPU 20A of the server 20 verifies whether all the identification information which is shipped from the client facility (MRO) 40 and to which the same delivery ID is set has been read by the warehouse 32. Then, the CPU 20A of the server 20 outputs the verification result, for example, displays the verification result on the display device 24, or notifies the client facility (MRO) 40, which is the shipping side of the airplane tire T, or the warehouse 32, which is the arrival side, of the verification result by e-mail or the like. The CPU 20A of the server 20 specifies the identification information that has been shipped from the client facility (MRO) 40 but has not been read, and confirms the delivery status such as whether the specified identification information has been read by another facility other than the warehouse 32 that is the arrival side. As will be described later, the worker confirms whether the identification information has not been read due to peeling of the two-dimensional code or the RFID attached to the airplane tire T. Then, the CPU 20A of the server 20 outputs the confirmation result, for example, displays the verification result on the display device 24, or notifies the client facility (MRO) 40, which is the shipping side of the airplane tire T, or the warehouse 32, which is the arrival side, of the verification result by e-mail or the like.

When reading the identification information, the portable terminal 61 acquires the position information in which the identification information has been acquired, and the date/time information. Then, the worker transmits the position information and the date/time information acquired using the portable terminal 61 to the server 20. The CPU 20A of the server 20 stores the position information and the date/time information as the dynamic data 120 in association with the identification information of the airplane tire T.

In a case in which there is an abnormality in the airplane tire T, for example, a two-dimensional code or an RFID attached to the airplane tire T has been peeled off, the worker of the warehouse 32 reads identification information of the airplane tire T having the abnormality using the portable terminal 61 that is set to a state of selecting the abnormality, and transmits the identification information to the server 20. Here, in a case in which the two-dimensional code or the RFID attached to the airplane tire T has been peeled off, the identification information is acquired by reading the serial using the portable terminal 61 or by the worker inputting the serial using the terminal 61. The CPU 20A of the server 20 stores the abnormal airplane tire T as the dynamic data 120 in association with the identification information of the airplane tire T.

Next, in step S206, the warehouse 32 ships the airplane tire T for collection to the factory 31 (arrow L6 in Fig. 4). At the time of shipment from the warehouse 32 to the factory 31, the worker acquires the identification information of the airplane tire T by using the portable terminal 61 that is set to a state of reading the identification information of the airplane tire T to be shipped. At this time, the portable terminal 61 acquires the position information in which the identification information has been acquired and the date/time information. Then, the worker transmits the identification information, the position information, and the date/time information acquired using the portable terminal 61 to the server 20. As illustrated in "No. 11" of Fig. 5A, the CPU 20A of the server 20 stores the identification information, the position information, and the date/time information of the airplane tire T as the dynamic data 120. The CPU 20A of the server 20 sets the delivery ID in association with one or more pieces of identification information acquired in the warehouse 32 that dispatches the airplane tires T. For example, one delivery ID is set for each container containing fifty airplane tires T. The delivery ID includes delivery destination information and the like.

Next, when the airplane tire T in step S207 arrives at the factory 31 from the warehouse 32, the worker of the factory 31 reads the delivery ID arrived at the factory 31 from the warehouse 32 using the portable terminal 60, and transmits the delivery ID to the server 20. The CPU 20A of the server 20 stores the delivery ID as the dynamic data 120. Then, the CPU 20A of the server 20 verifies whether all the delivery IDs shipped from the warehouse 32 to the factory 31 have been read. Then, the CPU 20A of the server 20 outputs an verification result, for example, displays the verification result on the display device 24, or notifies the warehouse 32, which is the shipping side of the airplane tires T, or the factory 31, which is the arrival side, by e-mail or the like. In a case in which there is a delivery ID that has not been read, the CPU 20A of the server 20 specifies the delivery ID that has been shipped from the warehouse 32 but has not been read, and confirms the delivery status such as whether the specified delivery ID has been read by another facility other than the factory 31 that is the arrival side. Then, the CPU 20A of the server 20 outputs a confirmation result, for example, displays the confirmation result on the display device 24, or notifies the warehouse 32, which is the shipping side of the airplane tires T, or the factory 31, which is the arrival side, by e-mail or the like.

In step S207, the worker of the factory 31 who has received the airplane tire T reads the identification information of the received airplane tire T using the portable terminal 60, and transmits the identification information to the server 20. As illustrated in "No. 12" of Fig. 5A, the CPU 20A of the server 20 stores the identification information, the position information, and the date/time information of the airplane tire T as the dynamic data 120. The CPU 20A of the server 20 verifies whether all the identification information which is shipped from the warehouse 32 and to which the same delivery ID is set has been read by the factory 31. Then, the CPU 20A of the server 20 outputs an verification result, for example, displays the verification result on the display device 24, or notifies the warehouse 32, which is the shipping side of the airplane tires T, or the factory 31, which is the arrival side, by e-mail or the like. The CPU 20A of the server 20 specifies the identification information that has been shipped from the warehouse 32 but has not been read, and confirms the delivery status such as whether the specified identification information has been read by another facility other than the factory 31 that is the arrival side. As will be described later, the worker confirms whether the identification information has not been read due to peeling of the two-dimensional code or the RFID attached to the airplane tire T. Then, the CPU 20A of the server 20 outputs a confirmation result, for example, displays the confirmation result on the display device 24, or notifies the warehouse 32, which is the shipping side of the airplane tires T, or the factory 31, which is the arrival side, by e-mail or the like.

When reading the identification information, the portable terminal 60 acquires the position information in which the identification information has been acquired, and the date/time information. Then, the worker transmits the position information and the date/time information acquired using the portable terminal 60 to the server 20. The CPU 20A of the server 20 stores the position information and the date/time information as the dynamic data 120 in association with the identification information of the airplane tire T.

Next, in step S208, the factory 31 that has received the airplane tire T for collection retreads the collected airplane tire T and ships the same to the warehouse 32 again. The subsequent processing is similar to step S102 described above. Here, in the retreading, the identification information may be updated by adding, to the identification information of the airplane tire T, a symbol indicating that the airplane tire T has been retreaded, a symbol indicating the number of times of retreading, or the like. The updated identification information is transmitted from the portable terminal 60 to the server 20 by the worker of the factory 31, and is stored as the static data 110 or the dynamic data 120. The facility for retreading the collected airplane tire T may be a facility different from the factory 31 that produces airplane tires.

In the case of receiving the arrival of the airplane tire T, the CPU 20A of the server 20 may notify the production facility 30 on the shipping side, the client facility (MRO) 40, or the client facility (airline) 50 of the airplane tire T that all the delivery IDs or the identification information have been read. That is, the production facility 30 on the shipping side, the client facility (MRO) 40, or the client facility (airline) 50 may be notified that the airplane tire T has been successfully delivered.

In the case of receiving shipment of the airplane tire T, the CPU 20A of the server 20 may notify the production facility 30 on the arrival side of the airplane tire T, the client facility (MRO) 40, or the client facility (airline) 50 of the delivery ID or the identification information. That is, the notification that the airplane tire T is to be delivered may be given to the production facility 30 on the arrival side, the client facility (MRO) 40, or the client facility (airline) 50.

The server 20 of the embodiment outputs the invoice of the airplane tire T to the client facility (MRO) 40 and the client facility (airline) 50 after verifying the delivery ID. However, the timing at which the server 20 outputs the invoice is not limited thereto. For example, the server 20 may output the invoice before the verification of the delivery ID is completed.

In a case in which the airplane tire T of the identification information read by the portable terminals 60, 61, 62, and 63 has been shipped to a different shipping destination, the server 20 may notify or display that the airplane tire T has been involved in a delivery error to the portable terminals 60, 61, 62, and 63 or the like.

It is desirable that the server 20 allow the client facility (MRO) 40 and the client facility (airline) 50 to view only its own static data 110 and its own dynamic data 120. For example, in a case in which the delivery status of the dynamic data 120 is recorded to include the delivery destination and the client data, it is desirable that the client facility (MRO) 40 and the client facility (airline) 50 be able to display only the information of the airplane tire T to which the company is designated as the delivery destination.

When the information is transmitted from the portable terminals 60, 61, 62, and 63 to the server 20, the history of the data of the users of the portable terminals 60, 61, 62, and 63 may also be transmitted to the server 20 and stored as the dynamic data 120. In this way, it is possible to know when and by whom the identification information or the like has been read, and to confirm who has read the identification information last when a problem has occurred.

The information processing unit 210 may process at least a part of the identification information and the status information of the airplane tire T stored as the static data 110 or the dynamic data 120 such that the client facility (MRO) 40 and the client facility (airline) 50 cannot browse the information in a case in which there is a predetermined setting. For example, the information of the airplane tires T for collection shipped from the client facilities 40 and 50 to the production facility 30 may be set to a non-browsable state, because there is no problem even though the information cannot be browsed. The past information may also be set to a non-browsable state. The client facilities 40 and 50 may be configured to view only the identification information and the status information of the airplane tires T to be shipped to themselves. Here, "not browsable" includes information that cannot be browsed due to deletion of data. It may be configured such that the client facilities 40 and 50 cannot browse unnecessary information.

The receiving unit 200 receives predetermined certification data of the airplane tire T in association with the identification information from the production facility 30, the client facility (MRO) 40, or the client facility (airline) 50, and stores the received certification data as the static data 110 or the dynamic data 120. Then, the output unit 220 may be able to output the certification data at a predetermined timing. Here, the certification data is a conformity certificate indicating that the airplane part has been manufactured through an official process, for example, an "equipment standard conformity certificate". The predetermined timing is after a facility at a stage before each processing illustrated in Fig. 4 dispatches the airplane tire T. The conformity certificate is output and made visible in response to a request from the client facility (MRO) 40 or the client facility (airline) 50.

Figs. 5A and 5B illustrate examples of the dynamic data 120 according to the embodiment.

As illustrated in Figs. 5A and 5B, as described above, the items stored as the dynamic data 120 include the tire ID, the delivery ID, the position information, the date/time information, and the delivery status. The items stored as the dynamic data 120 are not limited to those illustrated in Figs. 5A and 5B, and include, for example, the above-described photograph, conformity certificate, and the like. Here, in a case in which the identification information has been read using the portable terminals 60, 61, 62, and 63 that is set to a state of reading the identification information of the airplane tire T to be shipped, the server 20 determines and describes, as the delivery status, that the shipment is from the position information acquired at the same time. In a case in which the identification information has been read using the portable terminals 60, 61, 62, and 63 that is set to a state of reading the identification information of the airplane tire T to be received, the server 20 determines and describes that the shipment is from the position information acquired at the same time. Fig. 5A illustrates an example of a case in which all the identification information has been read when the identification information has been read by each facility, and Fig. 5B illustrates an example of a case in which the identification information of the airplane tire T having the tire ID "0001" has not been read when the airplane tire T has been arrived at the client facility (MRO).

According to the server 20 (airplane tire management device) of the embodiment, the identification information of the airplane tire T acquired in the production facility 30, the client facility (MRO) 40, or the client facility (airline) 50 is collated with the static data 110 or the dynamic data 120 stored in the storage 20D, so that it is possible to specify the airplane tire T for which the identification information is not read and to store the delivery status such as the arrival and shipment of the airplane tire T. The result of the collation can also be notified to the production facility 30, the client facility (MRO) 40, or the client facility (airline) 50. This makes it possible to efficiently manage the airplane tire T.

Various processes executed by the CPU 20A reading software (program) in the embodiment may be executed by various processors other than the CPU. Examples of the processor in this case include a programmable logic device (PLD) in which a circuit configuration can be changed after manufacturing such as a field-programmable gate array (FPGA), a dedicated electric circuit that is a processor having a circuit configuration exclusively designed for executing specific processing such as an application specific integrated circuit (ASIC), and the like. Each processing described above may be executed by one of these various processors, or may be executed by a combination of two or more processors of the same type or different types (for example, a plurality of FPGAs, a combination of a CPU and an FPGA, and the like). More specifically, the hardware structure of these various processors is an electric circuit in which circuit elements such as semiconductor elements are combined.

In the embodiment, each program is stored (installed) in advance in a computer-readable non-transitory recording medium. For example, the processing program 100 in the server 20 is stored in advance in the storage 20D. However, the invention is not limited thereto, and each program may be provided in a form recorded in a non-transitory recording medium such as a compact disc read only memory (CD-ROM), a digital versatile disc read only memory (DVD-ROM), and a universal serial bus (USB) memory. The program may be downloaded from an external device through a network.

The flow of the processing described in the embodiment is also an example, and unnecessary steps may be deleted, new steps may be added, or the processing order may be changed within a range not departing from the gist.

The technology of the disclosure described above includes the following aspects.

A first aspect includes: a communication unit that is able to communicate with a production facility that produces an airplane tire and a client facility that is a client for the airplane tire produced by the production facility; a receiving unit that receives, through the communication unit, identification information of the airplane tire and status information that includes position information or a delivery status of the airplane tire; a storage unit that stores the identification information and the status information received by the receiving unit; an information processing unit that updates the status information stored in the storage unit in a case in which the receiving unit receives the status information; and an output unit that is able to output the identification information and the status information.

A second aspect is the airplane tire management device according to the first aspect, in which the information processing unit sets a delivery ID in association with one or more pieces of the identification information acquired in the production facility or the client facility that dispatches the airplane tire, and verifies whether or not the delivery ID is acquired in the production facility or the client facility that receives the airplane tire, and the output unit is able to output a result of the verification.

A third aspect is the airplane tire management device according to the second aspect, in which in a case in which at least a part of the identification information in which the same delivery ID is set is not acquired in the production facility or the client facility that has received the airplane tire, the information processing unit specifies the airplane tire of the identification information that is not acquired.

A fourth aspect is the airplane tire management device according to any one of the first aspect to the third aspect, in which the receiving unit receives the identification information acquired in the client facility on assumption that the airplane tire has a predetermined abnormality, and the information processing unit updates the status information of the abnormal identification information received by the receiving unit.

A fifth aspect is the airplane tire management device according to any one of the first aspect to the fourth aspect, in which in a case in which there is a predetermined setting, the information processing unit processes at least a part of the status information so that the client facility cannot browse the status information.

A sixth aspect is the airplane tire management device according to any one of the first aspect to the fifth aspect, in which the receiving unit receives predetermined certification data of the airplane tire from the production facility or the client facility in association with the identification information, and the output unit is able to output the certification data at a predetermined timing.

A seventh aspect is the airplane tire management device according to the second aspect or the third aspect, in which the receiving unit receives the identification information of the airplane tire for collection from the client facility, and the information processing unit sets the delivery ID in association with one or more pieces of the identification information of the airplane tire for collection received by the receiving unit.

An eighth aspect is the airplane tire management device according to the seventh aspect, in which the receiving unit receives, from the client facility, consumption information of the airplane tire in association with the identification information of the airplane tire for collection.

A ninth aspect is the airplane tire management device according to any one of the first aspect to the eighth aspect, in which the receiving unit receives information regarding a shipping date/time of the airplane tire for collection from the client facility, and the output unit is able to output the information regarding the shipping date/time to the production facility.

A tenth aspect causes a computer to execute: communicating with a production facility that produces an airplane tire and a client facility that is a client for the airplane tire produced in the production facility; receiving status information that includes identification information of the airplane tire, and position information or a delivery status of the airplane tire; storing the received identification information and the position information or the delivery status; updating the stored status information in a case in which the status information is received; and outputting the identification information and the status information.

According to the disclosure, it is possible to efficiently manage an airplane tire.

The disclosure of Japanese Patent Application No. 2022-096057 is incorporated herein by reference in its entirety. All documents, patent applications, and technical standards described in this specification are incorporated herein by reference to the same extent as if each document, patent application, and technical standard are specifically and individually described to be incorporated by reference.

## Claims

1. An airplane tire management device, comprising:
a communication unit that is able to communicate with a production facility that produces an airplane tire and a client facility that is a client for the airplane tire produced by the production facility;
a receiving unit that receives, via the communication unit, identification information of the airplane tire and status information that includes position information or a delivery status of the airplane tire;
a storage unit that stores the identification information and the status information received by the receiving unit;
an information processing unit that updates the status information stored in the storage unit in a case in which the receiving unit receives the status information; and
an output unit that is able to output the identification information and the status information.

2. The airplane tire management device according to claim 1, wherein:
the information processing unit sets a delivery ID in association with one or more pieces of the identification information acquired in the production facility or the client facility which dispatches the airplane tire, and verifies whether or not the delivery ID is acquired in the production facility or the client facility which receives the airplane tire, and
the output unit is able to output a result of the verification.

3. The airplane tire management device according to claim 2, wherein, in a case in which at least a part of the identification information in which the same delivery ID is set is not acquired in the production facility or the client facility which has received the airplane tire, the information processing unit specifies the airplane tire of the identification information that is not acquired.

4. The airplane tire management device according to claim 1, wherein:
the receiving unit receives the identification information acquired in the client facility on an assumption that the airplane tire has a predetermined abnormality, and
the information processing unit updates the status information of the abnormal identification information received by the receiving unit.

5. The airplane tire management device according to claim 1, wherein, in a case in which there is a predetermined setting, the information processing unit processes at least a part of the status information so that the client facility cannot browse the status information.

6. The airplane tire management device according to claim 1, wherein:
the receiving unit receives predetermined certification data of the airplane tire from the production facility or the client facility in association with the identification information, and
the output unit is able to output the certification data at a predetermined timing.

7. The airplane tire management device according to claim 2, wherein:
the receiving unit receives the identification information of the airplane tire for collection from the client facility, and
the information processing unit sets the delivery ID in association with one or more pieces of the identification information of the airplane tire for collection received by the receiving unit.

8. The airplane tire management device according to claim 7, wherein the receiving unit receives, from the client facility, consumption information of the airplane tire in association with the identification information of the airplane tire for collection.

9. The airplane tire management device according to claim 1, wherein:
the receiving unit receives information regarding a shipping date/time of the airplane tire for collection from the client facility, and
the output unit is able to output the information regarding the shipping date/time to the production facility.

10. An airplane tire management program causing a computer to execute processing, the processing comprising:
communicating with a production facility that produces an airplane tire and a client facility that is a client for the airplane tire produced in the production facility;
receiving status information that includes identification information of the airplane tire, and position information or a delivery status of the airplane tire;
storing the received identification information and the position information or the delivery status;
updating the stored status information in a case in which the status information is received; and
outputting the identification information and the status information.
